Europäisches Patentamt

(19) European Patent Office

Office européen des brevets

(11) Publication number: **0 085 364**
**B1**

(12) **EUROPEAN PATENT SPECIFICATION**

(45) Date of publication of patent specification: **22.07.87**

(21) Application number: **83100510.3**

(22) Date of filing: **21.01.83**

(51) Int. Cl.⁴: **A 01 D 57/30**

(54) Crop harvesting machine having a windrow grouper.

(30) Priority: **29.01.82 FR 8201416**

(43) Date of publication of application:
**10.08.83 Bulletin 83/32**

(45) Publication of the grant of the patent:
**22.07.87 Bulletin 87/30**

(84) Designated Contracting States:
**AT CH DE FR GB IT LI NL**

(56) References cited:
**CH-A- 480 776**
**DE-A-2 448 500**
**DE-A-2 448 546**
**FR-A-1 933 726**
**FR-A-2 113 408**
**FR-A-2 127 703**
**FR-A-2 157 600**
**FR-A-2 341 258**
**FR-A-2 465 403**
**NL-A-6 705 524**

(73) Proprietor: **JOHN DEERE (Société Anonyme)**
**8, Quai de la Madeleine**
**F-45000 Orléans (FR)**

(73) Proprietor: **KUHN S.A.**
**4, Impasse des Fabriques**
**F-67700 Saverne (FR)**

(72) Inventor: **Roger, André**
**Valframbert**
**F-61006 Alençon (FR)**

(74) Representative: **Collins, Geoffrey Stainton**
**c/o Reddie & Grose 16 Theobalds Road**
**London WC1X 8PL (GB)**

Courier Press, Leamington Spa, England.

## Description

This invention relates to a crop harvesting machine which can, for example, be a mower for a grass crop.

Conventionally, grass to be harvested is cut by a mower and delivered rearwardly to form· a windrow on the ground, where it is left for a period in order to dry. A further machine then is used to pick the crop up from the windrow.

Some years ago it was proposed in CH—A— 480 776 to form a double windrow at every second pass of a mower across a field by providing the mower at its rearward part with a windrow grouper which functions at the second pass only and which rakes the crop across the ground from the second windrow just formed into the previous windrow. Subsequently the crop lying in the double windrow thus produced is picked-up in half the number of passes which would have been needed had the crop been distributed in single rather than double windrows. The rake disclosed in the Swiss patent specification can rotate about a horizontal or vertical axis.

One difficulty with such an arrangement is that foreign bodies and other rubbish such as stones would tend to be raked with the crop from the second windrow into the double windrow. These foreign bodies clearly present a mechanical danger to machinery used to pick up the double windrow and also a health hazard to cattle which may be fed on the harvested crop. Furthermore, movement of the crop by the rake is very limited.

It has also been suggested in FR—A—2 341 258 to position a broad belt conveyor behind a mower-conditioner. The conveyor runs round vertical rollers, extends right across the machine, and is in the flight path of the crop. It acts as a baffle wall to change suddenly the direction of the crop in order to produce a partial conditioning effect and to cause the crop to discharge from the side of the machine, i.e. at one end of the conveyor, rather than directly behind the machine. The object is to form a single (not a double) windrow which is, however, offset somewhat so that the machine does not run over it in a subsequent pass.

Although foreign bodies are not raked into the crop by such a device, the movement of the crop is still somewhat limited. The extent to which the belt conveyor can move the crop depends on its length and speed and both these factors are, of course, restricted.

In FR—A—2 127 703 it has been proposed to use a conventional swath drum, driven about a vertical axis, behind a cutterbar to deflect crop into a windrow the crop being guided to the drum by a vertical plate. The plate deflects somewhat the full flow of crop sideways, and the drum then moves the crop portion, which contacts it, into the remainder of the crop to form a windrow.

The present invention provides an arrangement for propelling crop to one side of a harvesting machine in which the risk of introducing foreign bodies into the crop is minimised and in which the crop can be moved efficiently over a significant distance.

According to the present invention the crop harvesting machine comprises a crop harvesting unit, a drum acting as a windrow grouper and power-drivable to spin it about an upwardly extending axis, and a hood therebetween, the unit, hood and drum being arranged so that harvested crop is impelled through the air in a flight path and delivered from a discharge outlet of the hood to the drum, and the drum being arranged in the flight path of the harvested crop so that the drum deflects the harvested crop in flight as the harvested crop is falling before it has substantial contact with the ground.

The invention in various aspects is defined in the appended claims.

An embodiment of the invention will now be described with reference to the accompanying diagrammatic drawings in which:

Fig. 1 is a side elevational view of a crop harvester of the invention in its operative position in the form of a mower having a drum windrow grouper;

Fig. 2 is a plan view of the harvester of Fig. 1;

Fig. 3 is a view partly in vertical cross section of the windrow grouper of Fig. 1;

Fig. 4 is a view in transverse cross section of the grouper along the line IV—IV of Fig. 3;

Fig. 5 is a perspective view of a tine-locating and -retaining housing with a portion of a tine of the windrow grouper.

In the drawings, the mower comprises a forward mowing unit 10 and a rearward windrow grouper 12, the mower being drawn by a tractor (not shown) through a crop of grass 14 to be harvested.

Since the mowing unit 10 is of conventional type it will not be described in any detail, but broadly it has a pair of wheels 16 which support a hooded frame 18 which is provided at its front with a transverse reciprocating-knife type of cutterbar 20 (or a drum- or disc-type cutterbar), houses a conditioner (the details of which are not shown) behind the cutterbar 20 and has a narrow discharge outlet 22 from which in conventional use the crop would be delivered at a level approximately above the wheels 16 into the windrow. The mower unit 10 is connected to the tractor by way of a bar arrangement 24, and drive for it is supplied through a shaft 26.

The top of the hooded frame 18 carries a pair of laterally spaced lugs 28 which are connected by a pivot shaft 30 which receives the front end of a support beam 32 which can swing upwardly and downwardly. This beam extends rearwardly in a longitudinal direction with respect to the mowing unit 10, to support at its other end the windrow grouper 12 to which it is connected by a further pivot shaft 34 and a pair of lugs 36, the lugs being welded to the upper surface of a box frame 38.

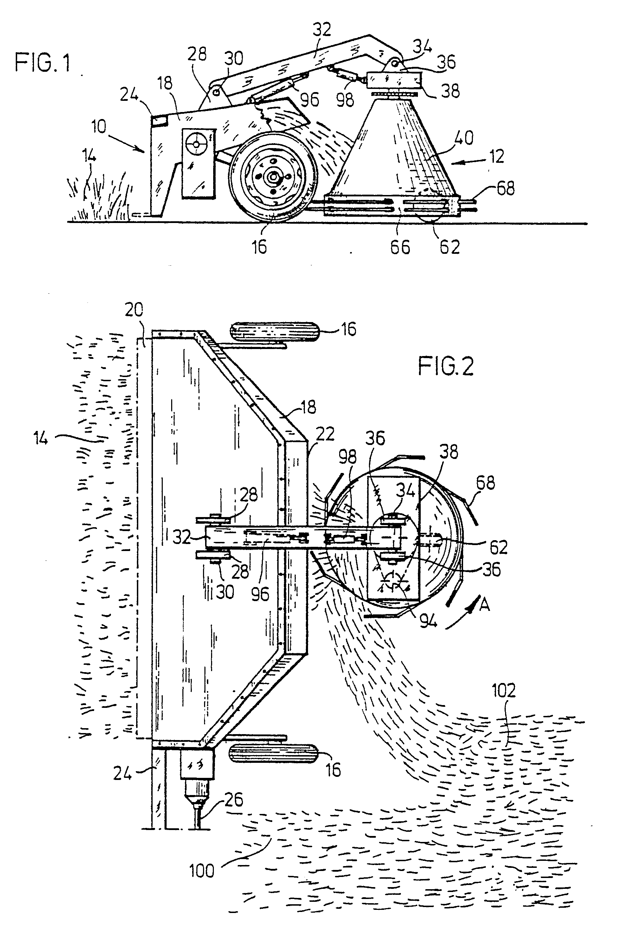

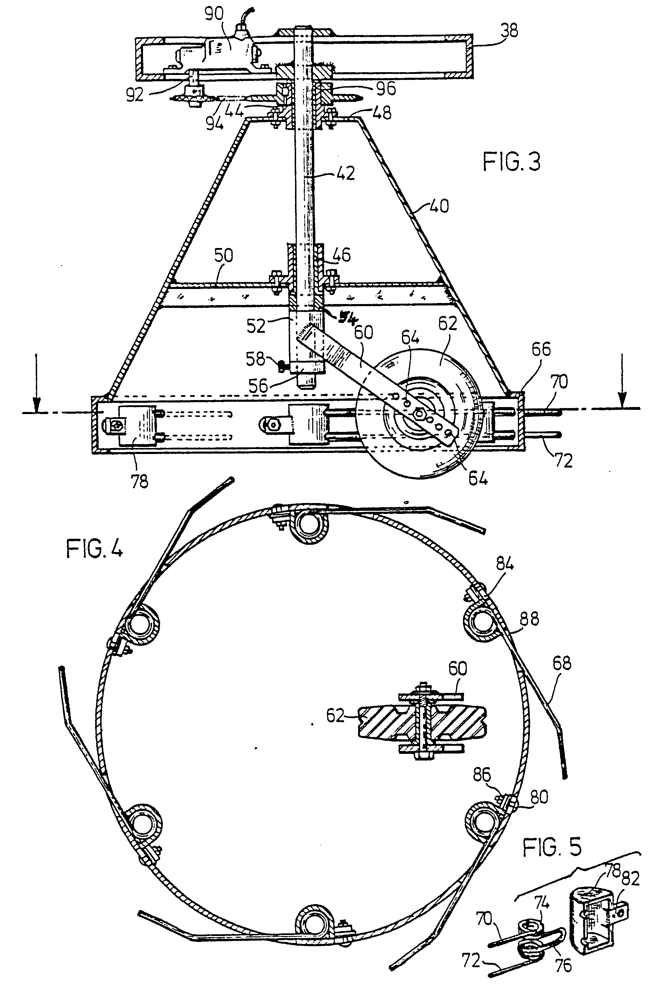

The frame 38 serves to carry below it a rotatable frusto-conical drum 40 by way of a rigid downwardly extending shaft 42 which· is welded to the upper and lower sides of the frame and is journalled in upper and lower bearings 44, 46 mounted on the top 48 of the drum and on an internal rigid horizontal (as viewed in Fig. 3) plate 50 which is secured to the wall of the drum 40. The shaft 42 extends beyond the lower bearing 46 and is received within a free-turning sleeve 52, spaced from the bearing 46 by an intermediate ring 54, and maintained on the shaft by a detachable locking ring 56 immediately below it on the shaft which is made fast with the shaft by a screw 58. The sleeve 52 is welded to a pair of downwardly and rearwardly extending struts 60 between which a drum supporting wheel 62 is mounted within the confines of the drum 40. The wheel is thus free to orient itself as it progresses along the ground. The wheel position is adjustable along the struts 60 in that it can be unbolted and remounted at various locations indicated at 64. The wheel contacts the ground when the grouper 12 is operative (as in Fig. 1) and so the clearance of the drum 40 from the ground is determined by the location of the wheel 62.

The drum 40 has a cylindrical skirt 66 at its base. The purpose of the skirt 66 is to provide a mounting for six flexible tines 68 spaced regularly round its periphery. In more detail, each tine is made of a single length of spring steel rod formed as two arms 70, 72 (shown broken away in Fig. 5) each with a spring 74 wound at its inner end portion and a slot part 76 therebetween. Each pair of springs 74 is received within a retaining housing 78 located on the inner face of the skirt 66 by a bolt 80 passing through a lug 82 of the housing and through a short slot 84 in the skirt and receiving a nut 86. The slot part 76 of each tine is fixed in position in that it is sandwiched between the lug 82 and the skirt 66 with the bolt 80 extending through it. The tines 68 run outwardly through slots 88 in the skirt 66 in a direction opposite to that of rotation of the drum 40 as indicated by an arrow A in Fig. 2 and are cranked at their outer end portions toward the skirt 66.

The angle of the tines 68 in relation to the skirt 66 can be adjusted by movement of the bolts 80 along their corresponding slots 84, and this alters the displacement of the crop as is explained below. Another advantage of the arrangement is that on breakage of the tine, the tine will tend to remain attached to the skirt 66 because in practice rupture generally occurs in such a manner that each spring 74 stays integral with a corresponding arm 70 and 72 and each spring 74 will, of course, continue to be retained in its housing 78 even though severed from its companion spring.

The arrangement for driving the drum 40 will now be described. The power unit for the drive is an hydraulic motor 90 which is housed in the box frame 38 and which has an output shaft 92 extending downwardly from it. The power is transmitted from the shaft 92 by a sprocket and chain drive 94 to an outer sleeve 96 receiving the upper bearing 44 and rigidly secured to the top 48 of the drum 40. The hydraulic motor 90 is operated from the tractor.

Finally, means by which the position of the drum is altered will be described. As mentioned above, the support beam 32 is swingable upwardly and downwardly. This achieved by means of a main piston and cylinder unit 96 (shown in Fig. 1) the cylinder of which is connected to the hooded frame 18 of the mowing unit 10 and the piston of which is connected to the underside of the beam 32. A turnbuckle 98 (or an adjustment piston and cylinder unit) is similarly connected between the leading side of the box frame 38 and the underside of the beam 32. The main piston and cylinder unit 96 serves to raise and lower the windrow grouper 12 between its operative position in Fig. 1 and an inoperative position (not shown) at which the windrow grouper is held aloft above the level of the discharge outlet 22 so that it is clear of the crop emerging from the mowing unit. The turnbuckle 98 is used to alter the angle of the axis of the drum 40 with respect to the ground.

The harvester is used for the first pass across a grass crop with the windrow grouper 12 in the inoperative position. The cut grass leaving the mowing unit 10 from the outlet 22 then simply falls undeflected into a first windrow 100.

At the beginning of the second pass the windrow grouper 12 is lowered by operation of the piston and cylinder unit 96 to its operative position, as shown in Fig. 1, at which the wheel 62 contacts the ground. Any angular adjustment of the axis of the drum 40 which may be desirable due to the crop and/or terrain is then made using the turnbuckle 98. Such adjustment will, of course, change the angle of the tines 68 with respect to the ground. In the particular position in Fig. 1 of the drum, the tines 68 are approximately parallel to the ground. Furthermore, the angle at which the tines 68 extend outwardly from the drum is adjusted as described above to ensure that the crop will be displaced correctly.

During the second pass the drum 40 is rotated by the hydraulic motor 90. The drum 40 is now in the delivery path of the crop and the crop contacts it, as indicated in Fig. 1, initially along the smooth side of the drum and the tines 68 also strike the crop. The overall result is that instead of falling directly onto the ground to form a second windrow parallel to the first, the crop is deflected toward the first windrow 100, thereby forming a composite or double windrow 102. Until the crop reaches the double windrow it does not contact the ground (or at most it contacts the ground only minimally) and most importantly the tines 68 are well clear of the ground so that there is minimal risk of their raking foreign bodies from the ground into the double windrow 102.

At the next pass of the harvester the windrow grouper 12 is again put into its inoperative raised position so that a fresh windrow is formed which will become a double windrow during the subsequent pass when the windrow grouper 12 is lowered and operative.

This pattern of procedure is repeated across the field.

Once the grass in the double windrows has dried sufficiently another machine is employed to pick the crop up. Clearly the number of passes necessary to do this is half that of the mower.

Many modifications can be made to the harvester, but some may be mentioned specifically.

If desired, the skirt 66 can take a frustro-conical form.

The drum 40 can, for example, be cylindrical or polygonal in cross section rather than frustro-conical. The skirt 66 would then respectively have a cylindrical or frustro-conical form or would be correspondingly polygonal in cross section. Thus the drum can be pyramidal. The drum 40 can be without a skirt and, in this event, can be provided with tines at its base portion.

The wheel 62 can be replaced by a skid for the sake of economy.

The housing 78 can be replaced by a single bridge member which passes through the springs 74 of a tine 68.

The windrow grouper 12 could be arranged to be pivoted about a longitudinal (fore-and-aft) axis or an upwardly extending axis between the operative and inoperative positions.

**Claims**

1. A crop harvesting machine comprising a crop harvesting unit (10), a drum (40) acting as a windrow grouper and power-drivable to spin it about an upwardly extending axis, and a hood (18) therebetween, the unit (10), hood (18) and drum (40) being arranged so that harvested crop is impelled through the air in a flight path and delivered from a discharge outlet (22) of the hood (18) to the drum (40), and the drum (40) being arranged in the flight path of the harvested crop so that the drum deflects the harvested crop in flight as the harvested crop is falling before it has substantial contact with the ground.

2. A crop harvesting machine according to claim 1 in which the machine is a mower-conditioner.

3. A crop harvesting machine according to claim 1 or 2 in which the drum (40) is frustro-conical.

4. A crop harvesting machine according to claim 1 or 2 in which the drum (40) is cylindrical.

5. A crop harvesting machine according to claim 1 or 2 in which the drum (40) is polygonal in cross section.

6. A crop harvesting machine according to any preceding claim in which the drum (40) has a skirt (66) at its base.

7. A crop harvesting machine according to claims 3 and 6 in which the skirt (66) is cylindrical.

8. A crop harvesting machine according to any preceding claim in which the drum (40) has crop-engaging tines (68).

9. A crop harvesting machine according to claim 8 in which the tines (68) are provided at the base portion of the drum (40) or at the skirt (66).

10. A crop harvesting machine according to claim 8 or 9 in which the tines (68) extend outwardly from the drum (40) in a direction opposed to the direction of rotation of the drum.

11. A crop harvesting machine according to claim 10 in which the tines (68) are cranked at their outer portions toward the drum (40) or skirt (66).

12. A crop harvesting machine according to claim 10 or 11 in which the angle at which the tines (68) extend outwardly from the drum is adjustable.

13. A crop harvesting machine according to any of claims 8 to 12 in which each tine (68) comprises a single length or rod formed as two tine arms (70, 72) with spring means (74) therebetween.

14. A crop harvesting machine according to claim 13 in which the rod is formed with a pair of springs (74) and a slot part (76) therebetween which receives an anchoring bolt (80).

15. A crop harvesting machine according to any of claims 8 to 14 in which the tines (68) are anchored on the inside of the drum (40) or skirt (66).

16. A crop harvesting machine according to claims 14 and 15 in which the two tine arms (70, 72) extend through a slot in the drum (40) or skirt (66).

17. A crop harvesting machine according to any of claims 13, 14 or 16 in which springs (74) of each tine (68) are received within a housing (78) mounted on the inside of the drum (40) or skirt (66).

18. A crop harvesting machine according to any preceding claim in which the drum (40) is mounted on a ground wheel (62) disposed within it.

19. A crop harvesting machine according to claim 18 in which the wheel (62) is adjustable to raise or lower the working height of the drum (40) above the ground.

20. A crop harvesting machine according to claim 18 or 19 in which the wheel (62) is pivotable about the axis of the drum.

21. A crop harvesting machine according to any preceding claim in which the drum (40) is mounted on a support beam (32) extending in the direction of travel of the machine.

22. A crop harvesting machine according to any preceding claim in which the drum (40) is movable between an operative and inoperative position.

23. A crop harvesting machine according to claim 22 in which the drum (40) is pivotable between the said positions.

24. A crop harvesting machine according to claim 23 in which the pivotal movement of the drum (40) is about an axis (30) which is transverse to the direction of travel of the machine.

25. A crop harvesting machine according to any preceding claim in which the drum (40) is driven by a motor (90) carried at the top of the windrow grouper.

26. A crop harvesting machine according to claims 3 and 6, or 4 and 6 in which the skirt (66) is frustro-conical.

# 0 085 364

**Patentansprüche**

1. Futtererntemaschine mit einer Futterernteeinheit (10), einer Trommel (40), die als Schwadleger wirkt und zum Rotieren um eine sich nach oben erstreckende Achse kraftantreibbar ist, und einer zwischen diesen angeordneten Haube (18), wobei die Einheit (10), Haube (18) und Trommel (40) so angeordnet sind, daß das geerntete Futter entlang einer Flugbahn durch die Luft geschleudert und von dem Abgabeauslaß (22) der Haube (18) an die Trommel (40) wietergegeben wird, und wobei die Trommel (40) in der Flugbahn des geernteten Futters so angeordnet ist, daß die Trommel das geerntete Futter im Flug ablenkt, während das geerntete Futter herabfällt und bevor es wesentlich Kontakt mit dem Boden erlangt.

2. Futtererntemaschine nach Anspruch 1, bei der die Maschine eine Mäh-Konditionierungsmaschine ist.

3. Futtererntemaschine nach Anspruch 1 oder 2, bei der die Trommel (40) kegelstumpfförmig ausgebildet ist.

4. Futtererntemaschine nach Anspruch 1 oder 2, bei der die Trommel (40) zylindrisch ausgebildet ist.

5. Futtererntemaschine nach Anspruch 1 oder 2, bei der die Trommel (40) im Querschnitt polygonal ausgebildet ist.

6. Futtererntemaschine nach irgendeinem der voranstehenden Ansprüche, bei der die Trommel (40) an ihrer Basis eine Schürze (66) aufweist.

7. Futtererntemaschine nach Anspruch 3 und 6, bei der die Schürze (66) zylindrisch ist.

8. Futtererntemaschine nach irgendeinem der voranstehenden Ansprüche, bei der die Trommel (40) das Futter ergreifende Zinken (68) aufweist.

9. Futtererntemaschine nach Anspruch 8, bei der die Zinken (68) am Basisbereich der Trommel (40) oder an der Schürze (66) vorgesehen sind.

10. Futtererntemaschine nach Anspruch 8 oder 9, bei der sich die Zinken (68) von der Trommel (40) in einer Richtung nach außen erstrecken, die der Drehrichtung der Trommel entgegengesetzt ist.

11. Futtererntemaschine nach Anspruch 10, bei der die Zinken (68) an ihren äußeren Bereichen in Richtung auf die Trommel (40) oder die Schürze (66) abgekröpft sind.

12. Futtererntemaschine nach Anspruch 10 oder 11, bei der der Winkel, unter dem die Zinken (68) sich von der Trommel nach außen erstrecken, einstellbar ist.

13. Futtererntemaschine nach irgendeinem der Ansprüche 8 bis 12, bei der jeder Zinken (68) eine einzige Stangenlänge umfaßt, aus der zwei Zinkenarme (70, 72) mit dazwischenliegenden Federmitteln (74) ausgebildet sind.

14. Futtererntemaschine nach Anspruch 13, bei der die Stange mit zwei Federn (74) und einem einen Schlitz (76) bildenden Teil zwischen diesen ausgebildet ist, welcher einen Verankerungsbolzen (80) aufnimmt.

15. Futtererntemaschine nach irgendeinem der Ansprüche 8 bis 14, bei der die Zinken (68) auf der Innenseite der Trommel (40) oder Schürze (66) verankert sind.

16. Futtererntemaschine nach Anspruch 14 und 15, bei der die beiden Zinkenarme (70, 72) sich durch einen Schlitz in der Trommel (40) oder Schürze (66) erstrecken.

17. Futtererntemaschine nach irgendeinem der Ansprüche 13, 14 oder 16, bei der die Federn (74) jedes Zinkens (68) in einem Gehäuse (78) aufgenommen sind, welches auf der Innenseite der Trommel (40) oder Schürze (66) montiert ist.

18. Futtererntemaschine nach irgendeinem der voranstehenden Ansprüche, bei der die Trommel (40) auf einem Bodenrad (62) montiert ist, das in der Trommel angeordnet ist.

19. Futtererntemaschine nach Anspruch 18, bei der das Rad (62) einstellbar ist, um die Arbeitshöhe der Trommel (40) über dem Boden zu vergrößern oder zu verkleinern.

20. Futtererntemaschine nach Anspruch 18 oder 19, bei der das Rad (62) um die Achse der Trommel schwenkbar ist.

21. Futtererntemaschine nach irgendeinem der voranstehenden Ansprüche, bei der die Trommel (40) auf einem Tragbalken (32) montiert ist, der sich in Fahrtrichtung der Maschine erstreckt.

22. Futtererntemaschine nach irgendeinem der voranstehenden Ansprüche, bei der die Trommel (40) zwischen einer arbeitswirksamen und einer unwirksamen Stellung beweglich ist.

23. Futtererntemaschine nach Anspruch 22, bei der die Trommel (40) zwischen den besagten Stellungen schwenkbar ist.

24. Futtererntemaschine nach Anspruch 23, bei der die Schwenkbewegung der Trommel (40) um eine Achse (30) erfolgt, welche quer zur Fahrtrichtung der Maschine verläuft.

25. Futtererntemaschine nach irgendeinem der voranstehenden Ansprüche, bei der die Trommel (40) durch einen Motor (90) angetrieben ist, der auf der Oberseite des Schwadlegers gehalten ist.

26. Futtererntemaschine nach den Ansprüchen 3 und 6 oder 4 und 6, bei der die Schürze (66) kegelstumpfförmig ausgebildet ist.

**Revendications**

1. Récolteuse qui comprend une unité de fauchage de récolte (10), un tambour (40) agissant comme un groupeur d'andains et qui peut être entraîné de manière à tourner autour d'un axe dirigé vers le haut, et un capot (18) interposé entre l'unité de fauchage et le tambour, l'unité (10), le capot (18) et le tambour (40) étant disposés de sorte que la récolte fauchée est propulsée dans l'air suivant une trajectoire de jetée et qu'elle est amenée par une sortie (22) du capot (18) sur le tambour (40), le tambour (40) étant placé dans le chemin de jetée de la récolte fauchée de sorte que le tambour dévie la récolte fauchée, pendant sa trajectoire et sa chute, avant que la récolte fauchée entre sensiblement en contact avec le sol.

2. Récolteuse suivant la revendication 1, dans laquelle la machine est une faucheuse-conditionneuse.

3. Récolteuse suivant la revendication 1 ou 2, dans laquelle le tambour (40) est tronconique.

4. Récolteuse suivant la revendication 1 ou 2, dans laquelle le tambour (40) est cylindrique.

5. Récolteuse suivant la revendication 1 ou 2, dans laquelle le tambour (40) a une section transversale polygonale.

6. Récolteuse suivant une quelconque des revendications précédentes, dans laquelle le tambour (40) comporte une jupe (66) à sa base.

7. Récolteuse suivant les revendications 3 et 6, dans laquelle la jupe (66) est cylindrique.

8. Récolteuse suivant une quelconque des revendications précédentes, dans laquelle le tambour (40) comporte des dents (68) d'attaque de la récolte.

9. Récolteuse suivant la revendication 8, dans laquelle les dents (68) sont prévues à la partie de base du tambour (40) ou sur la jupe (66).

10. Récolteuse suivant la revendication 8 ou 9, dans laquelle les dents (68) s'étendent à l'extérieur du tambour (40) dans une direction opposée à la direction de rotation du tambour.

11. Récolteuse suivant la revendication 10, dans laquelle les dents (68) sont pliées, à l'endroit de leurs parties extérieures, vers le tambour (40) ou la jupe (66).

12. Récolteuse suivant la revendication 10 ou 11, dans laquelle l'angle suivant lequel les dents (68) s'étendent vers l'extérieur, à partir du tambour, est réglable.

13. Récolteuse suivant l'une quelconque des revendications 8 à 12, dans laquelle chaque dent (68) est constituée d'une seule longueur de tige formée en deux branches de fourche (70, 72) avec interposition de moyens à ressort (74).

14. Récolteuse suivant la revendication 13, dans laquelle la tige est formée avec deux ressorts (74) entre lesquels est définie une fente (76) qui reçoit un boulon de fixation (80).

15. Récolteuse suivant l'une quelconque des revendications 8 à 14, dans laquelle les dents (68) sont fixées sur la face intérieure du tambour (40) ou de la jupe (66).

16. Récolteuse suivant les revendications 14 et 15 dans laquelle les deux branches de fourche (70, 72) s'étendent à travers une lumière ménagée dans le tambour (40) ou la jupe (66).

17. Récolteuse suivant l'une quelconque des revendications 13, 14 ou 16, dans laquelle les ressorts (74) de chaque dent (68) sont logés dans un boîtier (78) monté du côté intérieur du tambour (40) ou de la jupe (66).

18. Récolteuse suivant l'une quelconque des revendications précédentes, dans laquelle le tambour (40) est monté sur une roue (62) de contact avec le sol, disposée à l'intérieur du tambour.

19. Récolteuse suivant la revendication 18, dans laquelle la roue (62) est réglable de manière à relever ou abaisser le niveau de travail du tambour (40) au-dessus du sol.

20. Récolteuse suivant la revendication 18 ou 19, dans laquelle la roue (62) peut pivoter autour de l'axe du tambour.

21. Récolteuse suivant l'une quelconque des revendications précédentes, dans laquelle le tambour (40) est monté sur un bras support (32) s'étendant dans la direction de déplacement de la machine.

22. Récolteuse suivant l'une quelconque des revendications précédentes, dans laquelle le tambour (40) est déplaçable entre une position de travail et une position de repos.

23. Récolteuse suivant la revendication 22, dans laquelle le tambour (40) peut pivoter entre lesdites positions.

24. Récolteuse suivant la revendication 23, dans laquelle le mouvement pivotant du tambour (40) s'effectue autour d'un axe (30) qui est transversal à la direction de déplacement de la machine.

25. Récolteuse suivant l'une quelconque des revendications précédentes, dans laquelle le tambour (40) est entraîné par un moteur (90) porté à la partie supérieure du groupeur d'andains.

26. Récolteuse suivant les revendications 3 et 6, ou 4 et 6, dans laquelle la jupe (66) est tronconique.

FIG.1

FIG.2

FIG. 3

FIG. 4

FIG. 5